# EUROPÄISCHE PATENTANMELDUNG

(11) **EP 1 541 786 A1**
(43) Veröffentlichungstag der Anmeldung: **15.06.2005**
(21) Anmeldenummer: 03028044.0
(22) Anmeldetag: 08.12.2003
(51) Int. Cl.: E04H 7/06

(54) **Lagerbehälter**

(71) Anmelder: Von Bargen, Peter, 30659 Hannover (DE)
(72) Erfinder: Von Bargen, Peter, 30659 Hannover (DE)
(74) Vertreter: Kloiber, Thomas, Dr. Dipl.-Phys.

(57) **Zusammenfassung**

Die vorliegende Erfindung betrifft einen Lagerbehälter (1), insbesondere für eine Kleinkläranlage, eine Schmutz- und Abwasseranlage oder einen Flüssigkeitsspeicher, der, um bei einfacher Herstellung leicht und stabil zu sein, so aufgebaut ist, dass seine Außenwandungen (2) aus Fachwerk und Hüllenelementen (4) bestehen.

## Beschreibung

Die vorliegende Erfindung betrifft einen Lagerbehälter, insbesondere für eine Kleinkläranlage, eine Schmutz- und Abwasseranlage oder einen Flüssigkeitsspeicher.

Derartige Lagerbehälter sind üblicherweise Edelstahl oder aus Beton gefertigt, bzw. werden aus Betonfertigteilen am Ort des Einbaus erstellt. Nachteilig an dieser Bauweise ist das hohe Eigengewicht des Behälters, das aufwendige und damit kostenintensive Transport- und Hebezeuge erfordert.

Um unter anderem diesem Nachteil abzuhelfen, schlägt die DE 43 27 504 einen thermisch isolierten, aus vielen Einzelelementen zusammengesetzten selbsttragenden Flüssigkeitsbehälter vor, der auch zumindest teilweise unterirdisch eingebaut und dann als Schwimmbecken benutzt werden kann. Die Einzelelemente bestehen dabei jeweils aus zwei Metallplatten mit Verstärkungsblechen, zwischen denen ein PolyurethanSchaum (PU-Schaum) zur Wärmedämmung eingebracht wurde. Die eigentliche Lagerung der Flüssigkeit erfolgt in einer Kunststofffolie, die die Innenwände des Behälters auskleidet. Obwohl die Wandgestaltung dieses Behälters bereits Gewichtsvorteile gegenüber der massiven Betonbauweise bietet, bestehen Nachteile vor allem in der Notwendigkeit einer zusätzlichen Dichtfolie sowie darin, dass die Einzelteile noch mit Kantenprofilen und horizontalen Zugelementen versehen sein müssen, um eine ausreichende Stabilität zu gewährleisten.

Die DE 197 28 433 beschreibt einen weiter verbesserten Lagerbehälter, der auf die Dichtfolie verzichten und vollständig unterirdisch eingebaut werden kann. Die Wände dieses Behälters bestehen aus Kunststoff und sind ebenfalls in einer Sandwich-Bauweise mit PU-Schaum gefertigt.

Nachteilig an diesem Stand der Technik ist jedoch, dass aufgrund der geforderten Stabilität beim Erdeinbau, bestimmte Behältergrößen nicht überschritten werden können.

Aufgabe der vorliegenden Erfindung ist es daher, einen Lagerbehälter anzugeben, der bei einfacher Herstellung leicht und stabil ist.

Diese Aufgabe wird dadurch gelöst, dass die Außenwände des Lagerbehälters aus Fachwerk und Hüllenelementen bestehen. Diese Lösung stellt mit großem Vorteil sicher, dass das Gewicht des Behälters bei hoher Stabilität sehr gering ausfällt, da die Masse der das Fachwerk bildenden Fachwerksstäbe klein gegenüber der Hauptmasse der Hüllenelemente ist. Die Stabilität der Konstruktion wird durch das Fachwerk erzeugt, so dass die Hüllenelemente keine oder nur noch geringe Beiträge zur Stabilität liefern müssen und dementsprechend gering dimensioniert ausfallen können. Dadurch reduziert sich die Gesamtmasse des Behälters beträchtlich. Neben der Dimensionierung der Hüllungen kann auch das dazu verwendete Material sehr leicht sein, so dass beispielsweise anstelle von Metall auch Kunststoff für die Sandwich-Bauweise herangezogen werden kann. Auf diese Weise lassen sich Lagerbehälter herstellen, die sowohl über- als auch unterirdisch angeordnet werden können und die sowohl für flüssige als auch für stückige oder pulverige Lagergüter geeignet sind.

In einer Ausgestaltung der Erfindung ist vorgesehen, daß überwiegend das Fachwerk die auf den Lagerbehälter wirkenden Kräfte aufnehmend und weiterleitend ausgebildet ist, wobei das Fachwerksmaterial aus einem oder mehreren Stoffen der Gruppe gebildet durch Stahl, Eisen, Nichteisenmetalle, Legierungen der vorgenannten Stoffe, Kunststoffe oder faserverstärkte Kunststoffe gewählt ist, vorzugsweise legiertem Stahl. Stahl stellt als sehr zugfester Werkstoff eine ideale Materialgrundlage zur Herstellung von Lagerbehältern bzw. Behälterfachwerk dar. Damit können die Hüllenelemente für andere Funktionen zur Verfügung stehen, beispielsweise zum Korrosionsschutz oder zur Wärmeisolierung des Lagerbehälters.

Dadurch, dass das Fachwerk horizontale, vertikale und radiale Stäbe aufweist, wird mit großem Vorteil sichergestellt, dass der Lagerbehälter eine Vielzahl von räumlichen Gegebenheiten anpassbar ist. Außerdem wird so sichergestellt, dass die auftretenden Kräfte bei minimalem Materialaufwand sicher abgeleitet werden, was insbesondere dann gilt, wenn die horizontalen, vertikalen und radialen Stäbe jeweils als Rundstäbe ausgeführt sind.

Bestehen die radialen Stäbe aus mindestens zwei miteinander verbundenen Rundstäben und/oder Rohren, deren Verbindung vorzugsweise über zwischen diesen angeordneten Abstandshaltern erfolgt, und/oder aus u-förmigen Profilen mit mindestens einer Verstärkung im Bereich zwischen Schenkel und Schenkelverbindung, so können diese die auftretenden Kräfte sicher ableiten, ohne einen zu hohen Materialaufwand zu erfordern. Die Verstärkung können ebenfalls Rundstäbe sein.

In Ausgestaltung der Erfindung ist vorgesehen, dass wenigstens zwei radiale Stäbe an wenigstens einem ihrer Enden mit einer Verbindung, vorzugsweise wenigstens einem Stahlrohr, mittels einer Schweißnaht oder einer Klebenaht verbunden ausgebildet sind. Insbesondere, wenn diese Verbindung an einem freien Ende der radialen Stäben besteht, wird mit großem Vorteil die Stabilität des Fachwerks erhöht. Dadurch, dass die radialen Stäbe und die Verbindung mittels einer Schweißnaht oder einem Klebstoff miteinander verbunden sind, wird eine dauerhafte Verbindung zwischen diesen Bauteilen des Lagerbehälters und damit eine dauerhafte Stabilität erreicht.

Um die Stabilität des Lagerbehälters vorteilhaft weiter zu erhöhen, ist vorgesehen, dass die radialen Stäbe im Bereich eines Lagerbehälterdeckels und/oder eines Lagerbehälterbodens angeordnet sind. Dort nehmen die verstärkten Stäbe die vertikal und horizontal auf den Lagerbehälter wirkenden Kräfte auf und leiten diese sicher weiter.

Dadurch, dass die horizontalen Stäbe im Bereich eines überwiegend zylinderförmigen Lagerbehältermantels angeordnet sind und ringförmig umlaufend ausgebildet sind, vorzugsweise als beabstandeter konzentrischer Doppelring, dessen Ringspalt vorzugsweise von mindestens einem vertikalen Stab durchdrungen ausgebildet ist, wird vorteilhafterweise gleich Mehreres erreicht. Zum einen sorgen die kreisförmig horizontalen Stäbe für eine Aufnahme der horizontalen Kräfte, insbesondere des Erddruckes bei unterirdischem Einbau und erhöhen somit die Tragfähigkeit des Lagerbehältermantels. Zum anderen sorgt die vorteilhafte durchdringende Ausgestaltung der Verbindung zwischen horizontalen und vertikalen Stäben dafür, dass eine Bildung von Materialanhäufung vermieden wird und gleichzeitig die vertikalen Stäbe als Abstandshalter der konzentrisch angeordneten, ringförmigen horizontalen Stäbe dienen.

Wenn im Bereich des Lagerbehältermantels drei horizontale Stäbe angeordnet sind, vorzugsweise in zueinander nicht-äquidistanter Verteilung, wird mit Vorteil erreicht, dass die Stabilität des Lagerbehältermantels optimal an die auftretenden Kräfte angepasst ist. Dies gelingt beispielsweise dadurch, dass der Abstand der Stäbe zueinander zum Lagerbehälterboden hin abnimmt.

Mit großem Vorteil weist der Lagerbehältermantel einen inneren Durchmesser von mehr als 200 cm, vorzugsweise 235 cm und/oder eine Mantelhöhe von 200 cm auf. Bei dieser Bemaßung ergibt sich ein optimales Verhältnis von Lagervolumen und Behälterstabilität. Auch bei den Durchmessern von 135 cm, 170 cm und 205 cm ergeben sich gute Verhältnisse von Lagervolumen zu Behälterstabilität.

In Ausgestaltung der Erfindung ist vorgesehen, dass der Lagerbehälterboden als Konus ausgebildet ist und eine zentrale Platte aufweist, auf der die radialen Stäbe, vorzugsweise gewinkelt zu der durch die Scheibenfläche der Platte definierten Ebene befestigt sind, so dass die Verbindung überwiegend beabstandet parallel zu der Ebene liegend ausgebildet ist. Diese Ausgestaltung stellt mit großem Vorteil sicher, dass die Last optimal vom Konus auf die zentrale Platte und von dort über die radialen Stäbe weitergeleitet wird. Insbesondere, wenn die zentrale Platte aus einem Sandwich-Verband mit einer Stahlplatte als Verstärkung besteht, werden die Lasten optimal verteilt. Insbesondere erfolgt die Kraftableitung von der Lagerbehälterwand auf die Zentralplatte und von dort über die Profile auf die als Stahlrohrdoppelring ausgebildete Verstärkungen, so daß keine Meridian-Belastung des Sandwich-Verbundes auftritt.

Wie sich gezeigt hat, kann die Lastenverteilung noch weiter optimiert werden, wenn die zentrale Platte einen Durchmesser von 100 cm aufweist und/oder Verstärkungsstäbe aufweist. In diesem Fall wird ein Optimum an Material- und Gewichtsersparnis bei gleichzeitig höchster Stabilität erreicht.

Dieser Effekt wird auch dadurch erreicht, dass die radialen Stäbe im Winkel von 15° bis 25°, vorzugsweise 20° zur Ebene der zentralen Platte angeordnet sind.

Wenn der der Lagerbehälterdeckel als Konus ausgebildet ist und radiale Stäbe, vorzugsweise mit Verstärkung und endseitiger Verbindung, aufweist, ist er vorteilhafterweise besonders stabil ausgebildet. Auch wenn der Lagerbehälterdeckel erfindungsgemäß flach ausgebildet ist, weist er aufgrund der radialen Stäbe noch eine hohe Stabilität aus.

In Ausgestaltung der Erfindung ist vorgesehen, dass der Lagerbehälterdeckel eine Domöffnung aufweist, wobei die radialen Stäbe an der Domöffnung vorzugsweise durch ein Flacheisen miteinander verbunden ausgebildet sind, so dass die Domöffnung die Stabilität des Fachwerks nicht herabsetzt. Eine besonders feste Verbindung der Materialien wird dadurch erreicht, dass die radialen Stäbe und das Flacheisen mittels einer Schweißnaht oder einem Klebstoff miteinander verbunden sind.

Die Stabilität des Lagerbehälterdeckels wird vorteilhafterweise dadurch verbessert, dass die Domöffnung konzentrisch zu einer vertikalen Lagerbehälterachse angeordnet ist und/oder einen Durchmesser von vorzugsweise 63 cm aufweist, wobei die radialen Stäbe in einen Winkel von 22° zur Ebene der Domöffnung angeordnet sind. Die Domöffnung kann vorteilhafterweise auch nicht konzentrisch zur vertikalen Lagerbehälterachse angeordnet sein, wenn dies die besonderen Einbaubedingungen vor Ort erfordern.

Mit besonderem Vorteil wird die Gesamt-Stabilität der Fachwerkkonstruktion dadurch verbessert, dass Lagerbehälterdeckel und Lagerbehältermantel und/oder Lagerbehältermantel und Lagerbehälterboden über einen horizontalen Fachwerkstab verbunden sind. Dieser Fachwerkstab verbindet jeweils die einzelnen Baugruppen des Lagerbehälters zu einem einzigen, geschlossenen und stabilen Fachwerk. Hierbei ist der horizontale Fachwerkstab vorteilhafterweise als aus Kunststoff bestehender Rundstab mit einem Durchmesser von 9 cm ausgebildet. Auf diese Fachwerkstäbe liegen die Lagerbehälter-Baugruppen auf Druckkontakt an, so dass die auf die Baugruppen wirkenden Kräfte optimal abgeleitet werden können. Dadurch, dass diese Rundstäbe aus Kunststoff bestehen, wird eine weitere Gewichtsersparnis erreicht. Dies gilt umsomehr, als diese Rundstäbe die Fachwerkstäbe mit der größten Dimensionierung innerhalb des hier vorgestellten Fachwerkes bilden. Nur durch die erfinderische Verbindung von Stahl- und Kunststofffachwerkstäben ist eine weitere Optimierung des Verhältnisses von Behälterinnenvolumen zu Behältergesamtmasse möglich.

In Ausgestaltung der Erfindung ist vorgesehen, dass die Hüllenelemente in Sandwich-Bauweise, vorzugsweise schubfest, ausgeführt sind und somit vorteilhafterweise sehr leicht ausfallen.

Wenn die Hüllenelemente das Fachwerk einhüllend ausgebildet sind, wobei die Hüllenelemente und das Fachwerk miteinander verbunden ausgebildet sind, wird vorteilhafterweise ein Korrosionsschutz für die einzelnen Fachwerkstäbe erreicht, da die Hüllenelemente das Fachwerk vor korrosiven Außeneinflüssen schützen. Im Vergleich zu einer massiven Bauweise der Hüllenelemente kann mithilfe der Sandwich-Bauweise eine weitere Gewichtsreduzierung erreicht werden.

Insbesondere, wenn die Hüllenelemente aus einer Außenwand aus Polyethylen, einer Füllschicht aus Polyurethan und einer Innenwand aus Polyethylen bestehen, wobei die Fachwerkstäbe von der Füllschicht umhüllt umgeben sind, ist diese Gewichtsreduzierung optimal.

Auch dann, wenn die Hüllenelemente aus Kunststoff und/oder Kunststoffregenerat bestehen, wird bei hoher Stabilität der Konstruktion eine vorteilhafte Gestehungskostenreduktion erreicht.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: einen vertikalen Querschnitt durch einen erfindungsgemäßen Lagerbehälter,
- Fig. 2:: eine Aufsicht auf den Lagerbehälterboden,
- Fig. 3:: eine Seitenansicht des Lagerbehältermantels,
- Fig. 4:: eine teilweise Aufsicht auf den Lagerbehälterdeckel,
- Fig. 5:: Details des Lagerbehältermantels und
- Fig. 6 a, b, c:: Details der radialen Stäbe

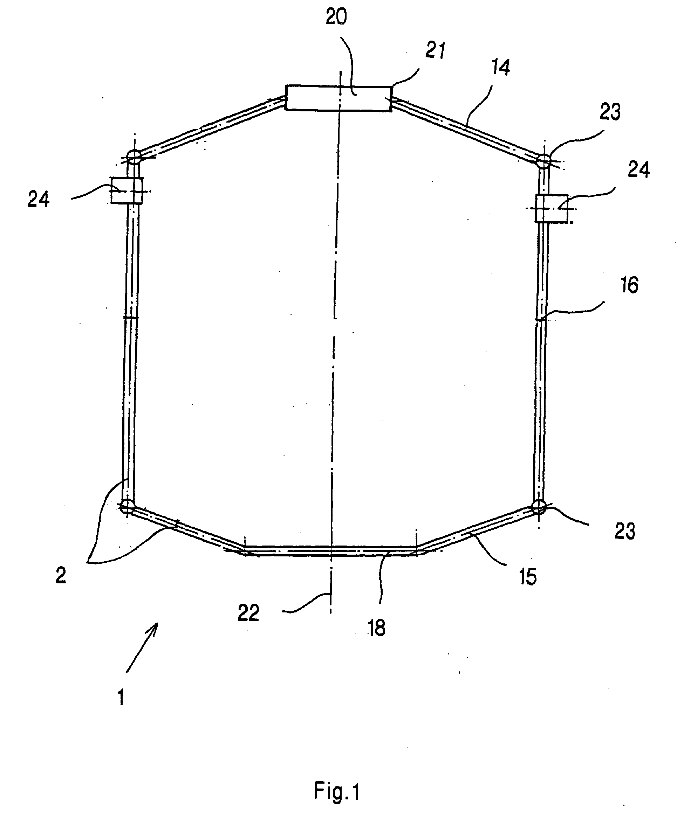

Fig. 1 zeigt einen vertikalen Querschnitt durch einen erfindungsgemäßen Lagerbehälter 1 mit konusförmigem Lagerbehälterboden 15, zylindrischem Lagerbehältermantel 16 und konusförmigem Lagerbehälterdeckel 14. Diese Baugruppen des erfindungsgemäßen Lagerbehälters sind über die zwei ringförmigen, horizontalen Fachwerkstäbe 23 druckfest miteinander verbunden. Im oberen Bereich des Lagerbehältermantels 16 sind zwei Zu- /Ablaufstutzen 24 angeordnet, deren jeweilige Beabstandung zum Lagerbehälterboden 15 unterschiedlich sein können. Am Lagerbehälterdeckel 14 ist eine konzentrisch um eine Lagerbehälterachse 22 angeordnete kreisförmige Domöffnung 20 zu erkennen, deren Rand durch ein Flacheisen 21 gebildet wird und die den Zugang zu einem Lagerbehälterinnenraum ermöglicht. Die Lagerbehälterachse 22 verläuft ebenfalls durch den Mittelpunkt der zentralen Platte 18 des Lagerbehälterbodens 15. Die Außenwandungen 2 werden durch Hüllenelemente 4 in Sandwich-Bauweise gebildet, auf die weiter unten eingegangen wird. Diese Hüllenelemente 4 umhüllen sämtliche Fachwerkstäbe vollständig, so dass weder auf der Behälteraußen- noch auf der Behälterinnenseite Kontaktflächen zwischen korrosiven Substanzen und den Fachwerkstäben existieren.

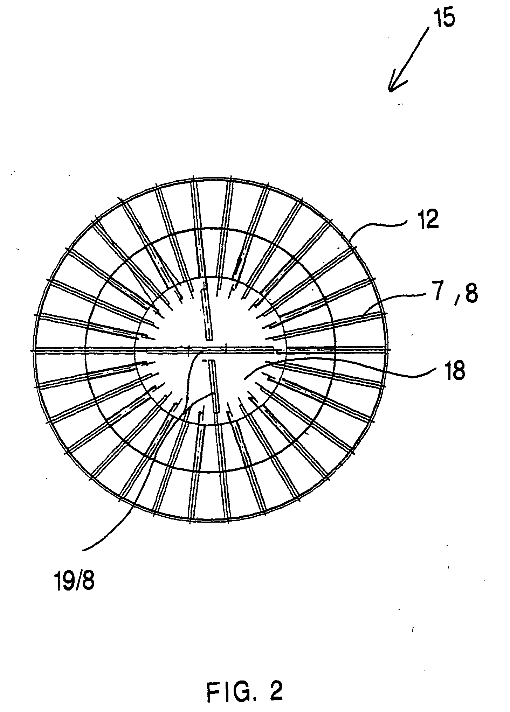

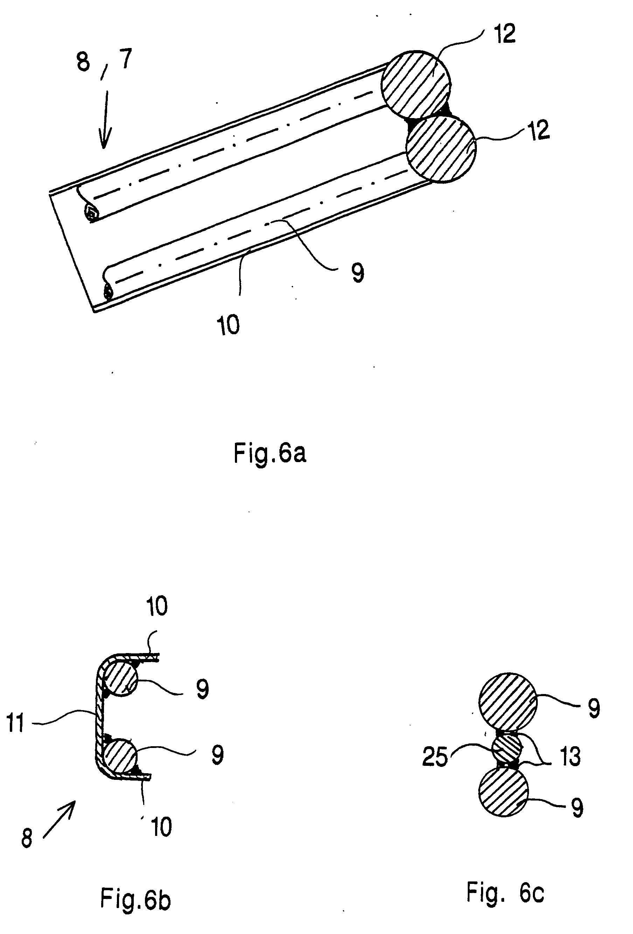

Fig. 2 zeigt eine Aufsicht auf den Lagerbehälterboden 15 mit zentraler Platte 18 und radialen Stäben 7. Die radialen Stäbe 7 sind zum einen auf der zentralen Platte 18 befestigt, insbesondere auf einer dort vorhandenen verstärkenden Stahlplatte. An ihrem anderen Ende sind sie über eine Verbindung 12 miteinander verbunden. Den Aufbau dieser radialen Stäbe 7 zeigen die Figuren 6a, 6b und 6c. Die Figuren 6a und 6b zeigen eine Ausführungsform der radialen Stäbe 7. Gemäß Fig. 6b werden die radialen Stäbe durch u-förmige Profile 8 aus Stahl gebildet, die zwischen Schenkel 10 und Schenkelverbindung 11 jeweils eine Verstärkung aufweisen. Diese Verstärkung besteht aus Stahl-Rundstäben 9, die mit dem Profil verschweißt sind. Die Figur 6c zeigt eine andere Ausführungsform der radialen Stäbe 7 im vertikalen Schnitt. Zwei Stahl-Rundstäbe 9 werden über Schweiß- bzw. Klebenähte 13 und mehrere voneinander beabstandete Abstandshalter 25 miteinander verbunden. Bei dieser Ausführungsform der radialen Stäbe 7 ist eine einfache Herstellung mit einer zur bereits geschilderten Ausführungsform gleich guten Stabilität verbunden, so dass die in Fig. 6c dargestellte Ausführungsform die bevorzugte Ausführungsform darstellt. Zur Befestigung an der zentralen Platte 18 werden die u-förmigen Profile bzw. die zwei Rundstäbe entsprechend auf Gehrung zugeschnitten. An ihrem von der zentralen Platte 18 abgewandten Ende sind die radialen Stäbe 7 durch zwei Verbindungen 12 miteinander verbunden, wobei die Verbindungen 12 aus zwei miteinander verschweißten Stahl-Rundstäben bestehen. Über diese beiden Verbindungen 12 liegen die radialen Stäbe an dem horizontalen Fachwerkstab 23 an, der den Lagerbehälterboden 15 mit dem Lagerbehältermantel 16 verbindet. Die dauerhafte Verbindung zwischen horizontalem Fachwerkstab 23 und Stahl-Verbindungen 12 wird mithilfe von Klebstoffen, vorzugsweise durch chemisch bindende Epoxidharzklebstoffen, hergestellt. Obwohl das klebende Verbinden von Polyethylen und Metall aufgrund der physikalischen Eigenschaften des Polyethylens sehr schwierig ist, wird bei der vorliegenden Erfindung doch Polyethylen als Hüllenelement-Material und als Fachwerksstabmaterial verwendet, da es besonders leicht und kostengünstig ist. Die in erster Linie auf Adhäsion beruhende Bindefähigkeit wird mit großem Vorteil über die Vorbehandlung der zu verklebenden Oberflächen erreicht: Die metallische Oberfläche wird entfettet, die Kunststoffoberfläche chemisch vorbehandelt, beispielsweise durch oxidieren oder beizen. Auf die gleiche Weise ist die zentrale Platte 18 mit einer verstärkenden Stahlplatte verbunden, so dass zusätzliche Verstärkungsstäbe 19 auf letzterer angeordnet werden können.

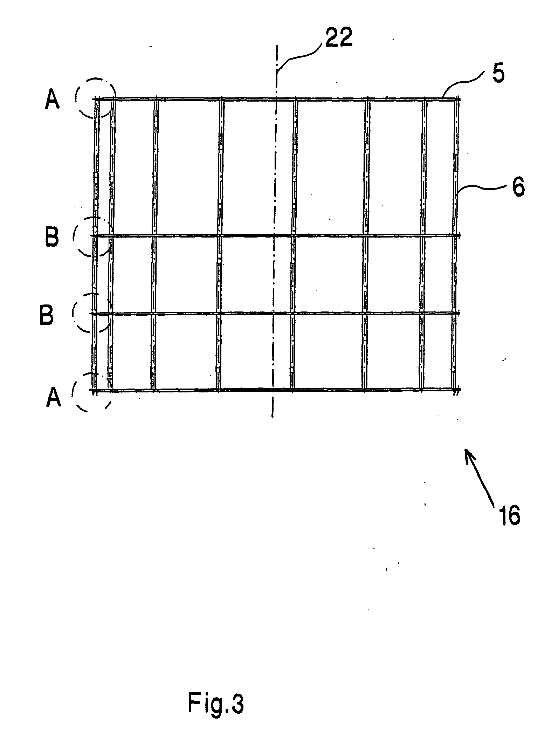

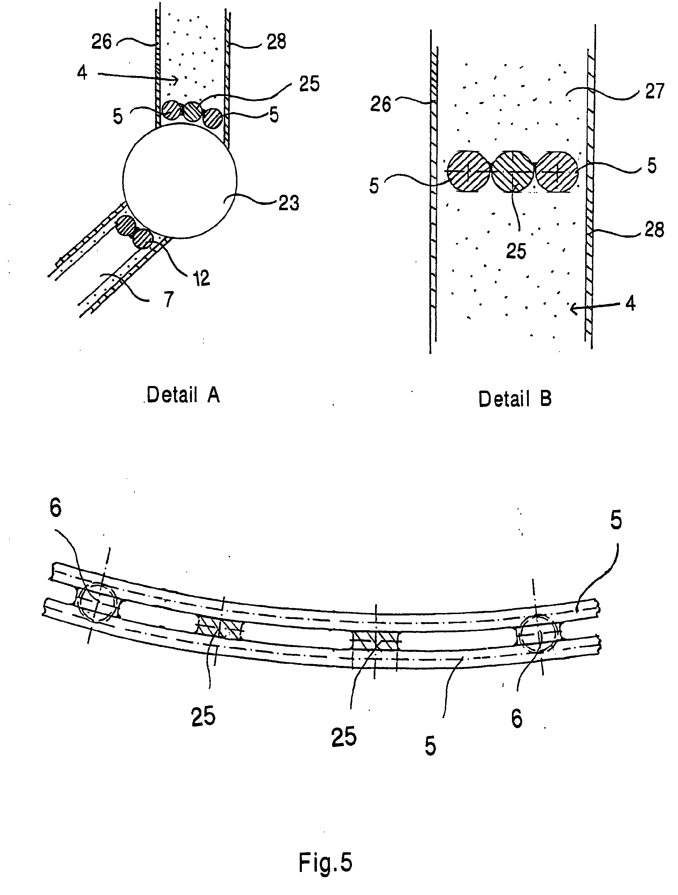

Fig. 3 zeigt eine teilweise geschnittene Seitenansicht des Lagerbehältermantels 16, bei dem die Hüllenelemente entfernt und so der Blick auf die Fachwerkkonstruktion ermöglicht ist. Das Fachwerk des Lagerbehältermantels 16 besteht aus horizontalen 5 und vertikalen Fachwerkstäben 6, wobei der Lagerbehältermantel 16 vier horizontale Stäbe 5 aufweist. Diese sind nicht äquidistant zueinander angeordnet, sonder weisen im unteren, dem Lagerbehälterboden 15 zugewandten Bereich einen kürzeren Abstand zueinander auf. Auf diese Weise wird mit großem Vorteil den zum Lagerbehälterboden hin anwachsenden horizontalen Kräften Rechnung getragen. Die Ausgestaltung der Verbindung der beiden Stabarten ist der Fig. 5 zu entnehmen. Der Lagerbehältermantel 16 kann auch ohne vertikale Fachwerkstäbe 6 ausgeführt sein, da die auftretenden Kräfte bei normaler Belastung durch die Wandelemente 4 weitergeleitet werden können. Erst bei extremer Belastung sind die vertikalen Fachwerkstäbe 6 notwendig.

Fig. 5 zeigt zum einen die Details A und B aus der Fig. 3 und zum anderen eine teilweise geschnittene Aufsicht auf einen Lagerbehältermantelabschnitt. Das Detail A zeigt die Ausgestaltung des unteren Randes des Lagerbehältermantels 16 im vertikalen Querschnitt durch die Lagerbehälterwand. Die Hüllenelemente 4 sind in Sandwichbauweise erstellt und bestehen aus einer Polyethylen-Außenwand 26, einer Polyurethan-Füllschicht 27 und einer Polyethylen-Innenwand 28, die schubfest miteinander verbunden sind. Dargestellt ist eine Ausführungsform, bei der der untere Abschluß des Lagerbehältermantels 16 durch einen horizontalen Stab 5 gebildet wird, der als beabstandeter Doppelring aus Stahl ausgebildet ist. Im Ringspalt zwischen den beiden Ringen befinden sich Abstandshalter 25 aus Kunststoff, die über Schweiß- oder Klebenähte 13 mit den Stahlringen verbunden sind. Wie das in Fig. 5 dargestellte Detail A zeigt, liegen die beiden Stahlringe nicht in einer gemeinsamen horizontalen Ebene, sondern sind leicht schräg zueinander befestigt. Mithilfe dieser schrägen Anordnung wird ein druckfester und sicherer Anschluß an den horizontalen Fachwerkstab 23 erreicht, an den wiederum die radialen Stäbe 7 des Lagerbehälterbodens 15 über die zwei Verbindungen 12 anschließen. Nicht dargestellt ist der obere, dem Lagerbehälterdeckel 14 zugewandte Abschluß des Lagerbehältermantels 16, der jedoch denselben Aufbau wie der untere, dem Lagerbehälterboden 15 zugewandte Rand des Lagerbehältermantels 16 aufweist und entsprechend den räumlichen Gegebenheiten angepasst wurde. Der horizontale Stab 5 muß nicht notwendigerweise direkt mit dem horizontalen Fachwerkstab 23 verbunden sein, die Verbindung von Lagerbehältermantel 16 mit dem horizontalen Fachwerkstab 23 kann auch über die Wandelemente 4 erfolgen. In diesem Fall bildete der horizontale Stab 5 nicht den unteren Abschluß des Lagerbehältermantels 16, sondern befindet sich weiter oberhalb des horizontalen Fachwerkstabes 23. In diesem Fall liegen die beabstandete Stahlringe 5 in einer gemeinsamen Ebene.

Detail B zeigt einen vertikalen Schnitt durch den Lagerbehältermantel 16 im Bereich eines horizontalen Stabes 5. Wie bereits geschildert, ist dieser als um eine Lagerbehälterachse 22 konzentrisch angeordneter Doppelring aus Stahl mit Abstandshaltern 25 ausgebildet, wobei der Doppelring in einer gemeinsamen Ebene liegt. Wie der Fig. 5 weiter zu entnehmen ist, sind zwischen dem Doppelring nicht nur Abstandshalter 25 angeordnet, sondern auch vertikale Stäbe 6, die somit den Spalt zwischen den Doppelringen durchdringen. Die vertikalen Stäbe 6 wechseln sich kreisumfänglich mit den Distanzhaltern 25 ab, wobei jeweils zwei Distanzhalter 25 zwischen zwei vertikalen Stäben 6 angeordnet sind.

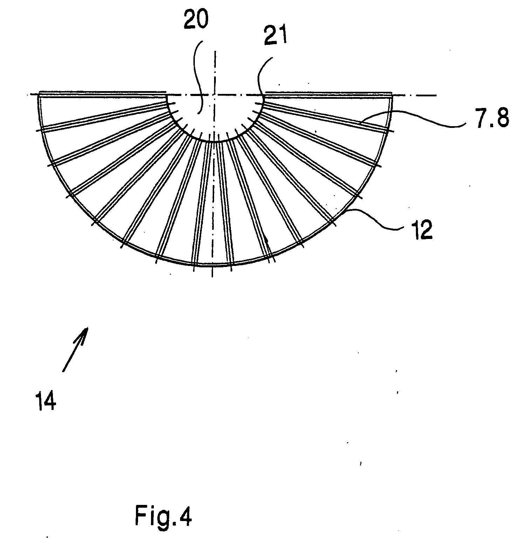

Fig. 4 zeigt eine Aufsicht auf die Innenseite des Lagerbehälterdeckels 14 mit der Domöffnung 20. Der Rand der Domöffnung 20 wird durch ein Flacheisen 21 gebildet, an dem die radialen Stäbe 7 gewinkelt angeschweißt sind. Die radialen Stäbe 7 sind entsprechend denen des Lagerbehälterbodens 15 aufgebaut, bestehen also aus u-förmigen Profilen 8 mit Verstärkungen und Verbindungen 12. Die Verbindungen 12 liegen auf dem nicht dargestellten oberen horizontalen Fachwerkstabe 23 druckfest an und stellen so die Verbindung von Lagerbehälterdeckel 14 und Lagerbehältermantel 16 her. Die Domöffnung kann auch oval in Form eines Mannloches ausgeführt sein, insbesondere dann, wenn ein erfindungsgemäßer Lagerbehälter beispielsweise innerhalb des Erdreiches liegend und nicht stehend eingebaut werden soll, was aufgrund der überragenden Stabilität des erfindungsgemäßen Lagerbehälters möglich ist. In diesem Falle befindet sich die Domöffnung im zylindrischen Lagerbehältermantel, was aufgrund der erfindungsgemäßen Fachwerkbauweise ebenfalls ohne relevante Stabilitätseinbußen möglich ist.

### BEZUGSZEICHENLISTE

- 1: Lagerbehälter
- 2: Außenwandungen
- 3: Fachwerk
- 4: Hüllenelemente
- 5: horizontale Stäbe
- 6: vertikale Stäbe
- 7: radiale Stäbe
- 8: U-Profile
- 9: Stahl-Rundstab
- 10: Schenkel
- 11: Schenkelverbindung
- 12: Verbindung
- 13: Schweißnaht/Klebenaht
- 14: Lagerbehälterdeckel
- 15: Lagerbehälterboden
- 16: Lagerbehältermantel
- 17: Doppelring
- 18: zentrale Platte
- 19: Verstärkungsstäbe
- 20: Domöffnung
- 21: Flacheisen
- 22: Lagerbehälterachse
- 23: horizontaler Fachwerkstab
- 24: Zu-/Ablaufstutzen
- 25: Abstandshalter
- 26: Außenwand
- 27: Füllschicht
- 28: Innenwand

## Patentansprüche

1. Lagerbehälter (1), insbesondere für eine Kleinkläranlage, eine Schmutz- und Abwasseranlage oder einen Flüssigkeitsspeicher, **dadurch gekennzeichnet, daß** seine Außenwandungen (2) aus Fachwerk und Hüllenelementen (4) bestehen.

2. Lagerbehälter (1) gemäß Anspruch 1, **dadurch gekennzeichnet, daß** überwiegend das Fachwerk die auf den Lagerbehälter (1) wirkenden Kräfte aufnehmend und weiterleitend ausgebildet ist, wobei das Fachwerksmaterial aus einem oder mehreren Stoffen der Gruppe gebildet durch Stahl, Eisen, Nichteisenmetalle, Legierungen der vorgenannten Stoffe, Kunststoffe oder faserverstärkte Kunststoffe gewählt ist, vorzugsweise aus Stahl.

3. Lagerbehälter (1) gemäß Anspruch 1 oder 2, **dadurch gekennzeichnet, dass** das Fachwerk horizontale (5), vertikale (6) und radiale Stäbe (7) aufweist, die vorzugsweise jeweils als Rundstäbe ausgeführt sind.

4. Lagerbehälter (1) gemäß Anspruch 3, **dadurch gekennzeichnet, dass** die radialen Stäbe (7) aus mindestens zwei miteinander verbundenen Rundstäben und/oder Rohren bestehen, wobei die Verbindung vorzugsweise über zwischen diesen angeordneten Abstandshaltern (25) erfolgt, und/oder aus u-förmigen Profilen (8) mit mindestens einer Verstärkung im Bereich zwischen Schenkel (10) und Schenkelverbindung (11) bestehen.

5. Lagerbehälter (1) gemäß einem der vorherigen Ansprüche, **dadurch gekennzeichnet, dass** wenigstens zwei radiale Stäbe (7) an wenigstens einem ihrer Enden mit einer Verbindung (12), vorzugsweise wenigstens einem Stahlrohr, mittels einer Schweißnaht oder einer Klebenaht (13) verbunden ausgebildet sind.

6. Lagerbehälter (1) gemäß einem der vorherigen Ansprüche, **dadurch gekennzeichnet, dass** die radialen Stäbe (7) im Bereich eines Lagerbehälterdeckels (14) und/oder eines Lagerbehälterbodens (15) angeordnet sind.

7. Lagerbehälter (1) gemäß einem der vorherigen Ansprüche, **dadurch gekennzeichnet, dass** die horizontalen Stäbe (5) im Bereich eines überwiegend zylinderförmigen Lagerbehältermantels (16) angeordnet sind und ringförmig umlaufend ausgebildet sind, vorzugsweise als beabstandeter konzentrischer Doppelring (17), dessen Ringspalt vorzugsweise von mindestens einem vertikalen Stab (6) durchdrungen ausgebildet ist.

8. Lagerbehälter (1) gemäß einem der vorherigen Ansprüche, **dadurch gekennzeichnet, dass** im Bereich des Lagerbehältermantels (16) drei horizontale Stäbe (5) angeordnet sind, vorzugsweise in zueinander nicht-äquidistanter Verteilung.

9. Lagerbehälter (1) gemäß einem der vorherigen Ansprüche, **dadurch gekennzeichnet, dass** der Lagerbehältermantel (16) einen inneren Durchmesser von mehr als 200 cm, vorzugsweise 235 cm und/oder eine Mantelhöhe von 200 cm aufweist.

10. Lagerbehälter (1) gemäß einem der vorherigen Ansprüche, **dadurch gekennzeichnet**, dassder Lagerbehälterboden (15) als Konus ausgebildet ist und eine zentrale Platte (18) aufweist, auf der die radialen Stäbe (7), vorzugsweise gewinkelt zu der durch die Scheibenfläche der zentralen Platte (18) definierten Ebene befestigt sind, so dass die Verbindung (12) überwiegend beabstandet parallel zu der Ebene liegend ausgebildet ist.

11. Lagerbehälter (1) gemäß einem der vorherigen Ansprüche, **dadurch gekennzeichnet, dass** die zentrale Platte (18) einen Durchmesser von 100 cm aufweist und/oder Verstärkungsstäbe (19) aufweist.

12. Lagerbehälter (1) gemäß einem der vorherigen Ansprüche, **dadurch gekennzeichnet, dass** die radialen Stäbe (7) im Winkel von 15° bis 25°, vorzugsweise 20°, zur Ebene der zentralen Platte (18) angeordnet sind.

13. Lagerbehälter (1) gemäß einem der vorherigen Ansprüche, **dadurch gekennzeichnet**, dassder Lagerbehälterdeckel (14) vorzugsweise als Konus ausgebildet ist und radiale Stäbe (7), vorzugsweise mit Verstärkung und endseitiger Verbindung (12), aufweist.

14. Lagerbehälter (1) gemäß einem der vorherigen Ansprüche, **dadurch gekennzeichnet**, dassder Lagerbehälterdeckel (14) eine Domöffnung (20) aufweist, wobei die radialen Stäbe (7) an der Domöffnung (20), vorzugsweise durch ein Flacheisen (21), miteinander verbunden, vorzugsweise mittels einer Schweißnaht oder einer Klebenaht (13), ausgebildet sind.

15. Lagerbehälter (1) gemäß einem der vorherigen Ansprüche, **dadurch gekennzeichnet, dass** die Domöffnung (20) konzentrisch zu einer vertikalen Lagerbehälterachse (22) angeordnet ist und/oder einen Durchmesser von vorzugsweise 63 cm aufweist, und/oder die radialen Stäbe (7) gewinkelt, vorzugsweise in einen Winkel von 22° zur Ebene der Domöffnung (20) angeordnet sind.

16. Lagerbehälter (1) gemäß einem der vorherigen Ansprüche, **dadurch gekennzeichnet, dass** Lagerbehälterdeckel (14) und Lagerbehältermantel (16) und/oder Lagerbehältermantel (16) und Lagerbehälterboden (15) über einen horizontalen Fachwerkstab (23) verbunden sind, wobei der horizontale Fachwerkstab (23) vorzugsweise als aus Kunststoff bestehender Rundstab mit einem Innendurchmesser von 9 cm ausgebildet ist.

17. Lagerbehälter (1) gemäß einem der vorherigen Ansprüche, **dadurch gekennzeichnet, dass** die Hüllenelemente (4) in Sandwich-Bauweise, vorzugsweise schubfest, ausgeführt sind.

18. Lagerbehälter (1) gemäß einem der vorherigen Ansprüche, **dadurch gekennzeichnet**, dassHüllenelemente(4) das Fachwerk einhüllend ausgebildet sind, wobei die Hüllenelemente (4) und das Fachwerk miteinander verbunden ausgebildet sind.

19. Lagerbehälter (1) gemäß einem der vorherigen Ansprüche, **dadurch gekennzeichnet, dass** die Hüllenelemente (4) aus einer Außenwand (26) aus Polyethylen, einer Füllschicht (27), aus Polyurethan und einer Innenwand (28) aus Polyethylen bestehen, wobei die Fachwerkstäbe von der Füllschicht (27) umhüllt ausgebildet sind.

20. Lagerbehälter (1) gemäß einem der vorherigen Ansprüche, **dadurch gekennzeichnet, dass** die Hüllenelemente (4) aus Kunststoff und/oder Kunststoffregenerat bestehen.
